# EUROPEAN PATENT APPLICATION

(11) **EP 2 908 569 A1**
(43) Date of publication of application: **19.08.2015**
(21) Application number: 13852887.2
(22) Date of filing: 23.05.2013
(51) Int. Cl.: H04W 16/10

(54) **DYNAMIC SPECTRUM MANAGEMENT METHOD, DEVICE AND SYSTEM**

(30) Priority: 06.11.2012 CN 201210437569
(71) Applicant: Huawei Technologies Co., Ltd., Longgang District Shenzhen, Guangdong 518129 (CN)
(72) Inventor: XIE, Yong, Shenzhen Guangdong 518129 (CN)
(74) Representative: Thun, Clemens
(86) International application number: PCT/CN2013/076136
(87) International publication number: WO 2014/071731

(57) **Abstract**

Embodiments of the present invention provide a method, an apparatus and a system for managing a dynamic spectrum. The method includes: receiving occupancy information of spectrum resources that is sent by a sensing device; determining, according to the occupancy information of the spectrum resources, a first spectrum resource occupied by a fixed authorized user, a second spectrum resource occupied by a non-fixed authorized user, and a third spectrum resource not occupied by any user in the spectrum resources; and configuring, according to occupancy information of the second spectrum resource and occupancy information of the third spectrum resource, a spectrum resource available for a communications node, where the first spectrum resource is an unavailable spectrum resource. In the embodiments of the present invention, occupancy information of a spectrum resource of a fixed authorized user and occupancy information of a spectrum resource of a non-fixed authorized user are obtained by using a sensing device to configure a spectrum resource available for a communications node. Therefore, in the embodiments of the present invention, the spectrum resource available for the communications node can be timely managed according to occupancy information of the spectrum resource.

## Description

This application claims priority to Chinese Patent Application No. 201210437569.5, filed with the Chinese Patent Office on November 6, 2012 and entitled "METHOD, APPARATUS AND SYSTEM FOR MANAGING DYNAMIC SPECTRUM", which is herein incorporated by reference in its entirety.

### TECHNICAL FIELD

Embodiments of the present invention relate to the field of communications, and in particular, to a method, an apparatus and a system for managing a dynamic spectrum.

### BACKGROUND

A spectrum is a most important resource in wireless communications. To avoid interference, generally, a fixed number of spectra are allocated to a specific service to use, and other services are not allowed to use these frequency bands fixedly allocated. However, some frequency bands are not fully used, and a large number of idle spectra exist, such as a TV frequency band.

Accordingly, in the industry, a spectrum application solution is proposed for the TV frequency band. The solution includes a central control node and a spectrum database. The central control node queries TV spectrum resource information of a location of a base station according to a periodic spectrum request of the base station through the spectrum database, and allocates an available TV spectrum for the base station for the base station to use during a wireless service. Because real-time performance of a spectrum resource in the spectrum database is poor, a spectrum resource allocated for the base station has poor reliability.

### SUMMARY

Embodiments of the present invention provide a method for managing a dynamic spectrum, a spectrum management apparatus, and a wireless network architecture, which may improve real-time performance of spectrum management, so as to improve reliability of the spectrum management.

In a first aspect, a method for managing a dynamic spectrum is provided and the method includes: receiving occupancy information of spectrum resources that is sent by a sensing device; determining, according to the occupancy information of the spectrum resources, a first spectrum resource occupied by a fixed authorized user, a second spectrum resource occupied by a non-fixed authorized user, and a third spectrum resource not occupied by any user in the spectrum resources; and configuring, according to occupancy information of the second spectrum resource and occupancy information of the third spectrum resource, a spectrum resource available for a communications node, where the first spectrum resource is an unavailable spectrum resource.

In a first possible implementation manner, with reference to the first aspect, the determining, according to the occupancy information of the spectrum resources, a first spectrum resource occupied by a fixed authorized user, a second spectrum resource occupied by a non-fixed authorized user, and a third spectrum resource not occupied by any user in the spectrum resources is specifically implemented as: determining the first spectrum resource, the second spectrum resource, and the third spectrum resource according to an authorized status of the spectrum resources.

In a second possible implementation manner, with reference to the first aspect, the method further includes: before the receiving occupancy information of spectrum resources that is sent by a sensing device and obtained by the sensing device, sending first control information to the sensing device, where the first control information is used to control the sensing device to obtain the occupancy information of the spectrum resources and send the occupancy information of the spectrum resources.

In a third possible implementation manner, with reference to the first aspect, the receiving occupancy information of spectrum resources that is sent by a sensing device is specifically implemented as: receiving, at predetermined time or periodically, the occupancy information of the spectrum resources that is sent by the sensing device.

In a fourth possible implementation manner, with reference to the first aspect or any one of the first possible implementation manner of the first aspect to the third possible implementation manner of the first aspect, the configuring, according to occupancy information of the second spectrum resource and occupancy information of the third spectrum resource, a spectrum resource available for a communications node includes: sending first configuration information to the communications node, where the first configuration information carries sub-spectrum resources allocated to the communications node, and the sub-spectrum resources include a spectrum resource in the second spectrum resource or in the third spectrum resource, so as to enable the communications node to configure the sub-spectrum resources according to the first configuration information; receiving feedback information of the communications node, where the feedback information is used to indicate a result that the communications node configures the sub-spectrum resources according to the first configuration information; and updating stored information of the spectrum resources according to the feedback information if that the communications node configures the sub-spectrum resources according to the first configuration information succeeds wholly or partially.

In a fifth possible implementation manner, with reference to the fourth possible implementation manner of the first aspect, if the communications node is a base station, the method further includes: before the configuring, according to occupancy information of the second spectrum resource and occupancy information of the third spectrum resource, a spectrum resource available for a communications node, receiving startup information sent by the base station, where the startup information is used to request the base station to enable a required spectrum resource; and the sending first configuration information to the communications node is specifically implemented as: sending the first configuration information to the base station according to the startup information.

In a sixth possible implementation manner, with reference to the fifth possible implementation manner of the first aspect, specific implementation is that: the startup information includes at least one kind of the following: a geographic location, maximum transmit power, antenna configuration, a height, a supported bandwidth range, a supported technical standard, a modulation and coding scheme, whether to support a sensing function, and service information of the base station.

In a seventh possible implementation manner, with reference to the fourth possible implementation manner of the first aspect, the communications node is a base station, and if a non-fixed authorized service of the base station is being transmitted between the base station and a user equipment, the configuring, according to occupancy information of the second spectrum resource and occupancy information of the third spectrum resource, a spectrum resource available for a communications node includes: sending, by the base station, to the user equipment, third configuration information, and the second spectrum resource and the third spectrum resource in the sub-spectrum resources carried in the third configuration information, where the third configuration information instructs the user equipment to switch the non-fixed authorized service from the second spectrum resource to the third spectrum resource at a specified time point.

In an eighth possible implementation manner, with reference to the seventh possible implementation manner of the first aspect, the method further includes: receiving the occupancy information of the spectrum resources that is sent by the communications node or operating parameter information of the communications node, where the operating parameter information includes at least one kind of the following: spectral bandwidth information, transmit power information, modulation and coding scheme information, channel quality indicator CQI information, signal to interference and noise ratio SINR information, bit error rate BER/block error rate BLER information, maximum service throughput information within specified time, minimum service throughput information within specified time, average service throughput information within specified time, and service type information of the communications node.

In a ninth possible implementation manner, with reference to the eighth possible implementation manner of the first aspect, the method further includes: sending second configuration information to the communications node according to the operating parameter information of the communications node, where the second configuration information is used to adjust an operating parameter of the communications node, and the operating parameter includes at least one kind of the following: a spectral bandwidth, transmit power, antenna configuration, and an access policy of the communications node.

In a tenth possible implementation manner, with reference to the first aspect or any one of the first possible implementation manner of the first aspect to the seventh possible implementation manner of the first aspect, the method further includes: storing the occupancy information of the spectrum resources.

In a second aspect, a spectrum management apparatus is provided and the apparatus includes: a receiving unit, receiving occupancy information of spectrum resources that is sent by a sensing device; a determining unit, determining, according to the occupancy information of the spectrum resources that is received by the receiving unit, a first spectrum resource occupied by a fixed authorized user, a second spectrum resource occupied by a non-fixed authorized user, and a third spectrum resource not occupied by any user in the spectrum resources; and a managing unit, configuring, according to occupancy information of the second spectrum resource and occupancy information of the third spectrum resource, a spectrum resource available for a non-fixed authorized communications node, where the first spectrum resource is an unavailable spectrum resource.

In a first possible implementation manner, with reference to the second aspect, the determining unit is specifically configured to determine the first spectrum resource, the second spectrum resource, and the third spectrum resource according to an authorized status of the spectrum resources.

In a second possible implementation manner, with reference to the second aspect, the managing unit is specifically configured to generate first control information, where the first control information is used to control the sensing device to obtain the occupancy information of the spectrum resources and send the occupancy information of the spectrum resources; and the spectrum management apparatus further includes: a sending unit, which may send the first control information to the sensing device.

In a third possible implementation manner, with reference to the second aspect, the receiving unit is specifically configured to receive, at predetermined time or periodically, the occupancy information of the spectrum resources that is sent by the sensing device.

In a fourth possible implementation manner, with reference to the second aspect, the managing unit is specifically configured to generate first configuration information, where the first configuration information carries sub-spectrum resources allocated to the communications node, and the sub-spectrum resources include a spectrum resource in the second spectrum resource or in the third spectrum resource, so as to enable the communications node to configure the sub-spectrum resources according to the first configuration information; the sending unit is specifically configured to send the first configuration information to the communications node; the receiving unit is specifically configured to receive feedback information of the communications node, where the feedback information is used to indicate a result that the communications node configures the sub-spectrum resources according to the first configuration information; and the determining unit is specifically configured to update stored information of the spectrum resources according to the feedback information if that the communications node configures the sub-spectrum resources according to the first configuration information succeeds wholly or partially.

In a fifth possible implementation manner, with reference to the fourth possible implementation manner of the second aspect, the receiving unit is specifically configured to receive startup information sent by the base station, where the startup information is used to request the base station to enable a required spectrum resource; and the managing unit is specifically configured to generate the first configuration information according to the startup information.

In a third aspect, a wireless communications system is provided, and the system includes: a sensing device, where the sensing device has a radio sensing capability and is configured to send occupancy information of the spectrum resources; and
the spectrum management apparatus, configured to receive the occupancy information of the spectrum resources; determine, according to the occupancy information of the spectrum resources, a first spectrum resource occupied by a fixed authorized user, a second spectrum resource occupied by a non-fixed authorized user, and a third spectrum resource not occupied by any user in the spectrum resources; configure, according to occupancy information of the second spectrum resource and occupancy information of the third spectrum resource, a spectrum resource available for a communications node, where the first spectrum resource is an unavailable spectrum resource.

In a first possible implementation manner, with reference to the third aspect, the system further includes: the communications node, configured to receive configuration information sent by the spectrum management apparatus, and configure the spectrum resource of the communications node according to the configuration information.

In the first possible implementation manner, with reference to the first possible implementation of the third aspect, the system is specifically implemented as follows: the sensing apparatus is a network element independent of the communications node in the system; or the sensing apparatus is a component of the communications node.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flow chart for managing a spectrum resource according to an embodiment of the present invention;
FIG. 2 is an interaction flow chart for obtaining occupancy information of spectrum resources according to an embodiment of the present invention;
FIG. 3 is an interaction flow chart for allocating a spectrum resource according to an embodiment of the present invention;
FIG. 4 is another interaction flow chart for allocating a spectrum resource according to an embodiment of the present invention;
FIG. 5 is another interaction flow chart for allocating a spectrum resource according to an embodiment of the present invention;
FIG. 6 is a schematic block diagram of a spectrum management apparatus according to an embodiment of the present invention;
FIG. 7 is another schematic block diagram of a spectrum management apparatus according to an embodiment of the present invention; and
FIG. 8 is a schematic diagram of a wireless network architecture of a wireless communications system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

Technical solutions of the present invention may be applied to various communications systems, such as: a global system of mobile communications (GSM, Global System of Mobile communication), a code division multiple access (CDMA, Code Division Multiple Access) system, wideband code division multiple access wireless (WCDMA, Wideband Code Division Multiple Access Wireless), a general packet radio service (GPRS, General Packet Radio Service), and long term evolution (LTE, Long Term Evolution)

A user equipment (UE, User Equipment), which may also be called a mobile terminal (Mobile Terminal), a mobile user device and the like, may communicate with one or more core networks through a radio access network (such as, RNA, Radio Access Network). The user equipment may be a mobile terminal, such as a mobile phone (or called a "cell" phone) and a computer having a mobile terminal, for example, may be a portable mobile device, a pocket mobile device, a handheld mobile device, a mobile device built in a computer, or a vehicle-mounted mobile device, which exchange language and/or data with the radio access network.

A base station may be a base station (BTS, Base Transceiver Station) in the GSM or the CDMA, or a base station (NodeB) in the WCDMA, or an evolved Node B (eNB or e-NodeB, evolutional Node B) in the LTE, which is not limited in the present invention. However, to describe conveniently, the following embodiments are described by using an eNB as an example.

A cognitive radio (CR, Cognitive Radio) technology is a technology for obtaining information of an available spectrum resource in a wireless network environment. With the cognitive radio technology, unoccupied frequency bands appearing anytime and anywhere may be found by sensing a wireless spectrum environment, and these frequency bands are accessed dynamically on the premise that a primary user (PU, Primary User, user using an originally fixed allocated frequency) is interfered with, so as to improve a spectrum utilization rate.

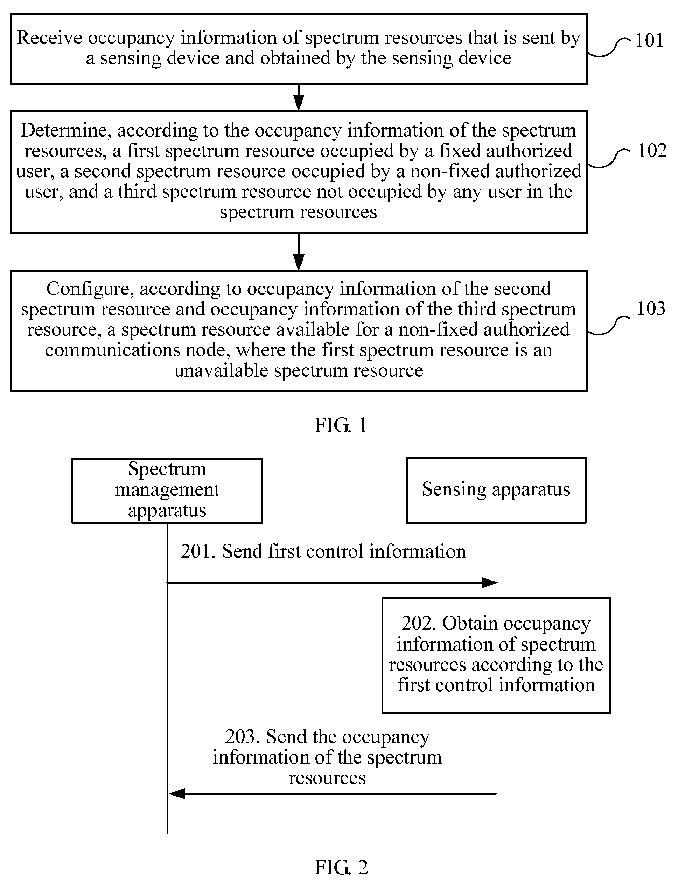

FIG. 1 is a flow chart for managing a spectrum resource according to an embodiment of the present invention. A method shown in FIG. 1 is executed by a spectrum management apparatus. The spectrum management apparatus generally includes a spectrum managing module and a spectrum database, which may be separately deployed in a wireless communications network and is used as a network element of the wireless communications network; or may be a component of a core network of a wireless communications network, or a component of a network controller or a gateway of a wireless communications network, or a component of a base station of a wireless communications network. The spectrum management apparatus manages a spectrum resource in a wireless network and may have parameter-related information of this network, including static/semi-static information and dynamic information. The static/semi-static information includes information unchanged or less frequently changed, such as spectrum resource information and an occupancy situation of a spectrum resource in a network, spectrum access policy information, a base station location, a topology, a height, maximum power, a technical access parameter, and an environment and terrain; and the dynamic information includes information changed rapidly, such as interference information in an environment, a user location/service, and transmit power of a base station. The dynamic/semi-static information is obtained from a sensing module or a base station or a terminal, and the sensing module/the base station may be controlled/configured to obtain corresponding information. According to the obtained information, a proper spectrum resource and other wireless parameter information, such as an access technology, power, a coding and decoding scheme, are allocated to a wireless communications node through calculation.
101: Receive occupancy information of spectrum resources that is sent by a sensing device.
102: Determine, according to the occupancy information of the spectrum resources, a first spectrum resource occupied by a fixed authorized user, a second spectrum resource occupied by a non-fixed authorized user, and a third spectrum resource not occupied by any user in the spectrum resources.

A user that obtains a use right of a spectrum resource through allocation by adopting a fixed spectrum allocation policy is called a fixed authorized user of the spectrum resource, and the fixed authorized user has a highest spectrum use priority to use its spectrum resource. Other users using the spectrum resource are collectively called non-fixed authorized users of the spectrum resource, and a spectrum use priority of a non-fixed authorized user is lower than a spectrum use priority of a fixed authorized user. A service transmitted by the fixed authorized user on the spectrum resource is called a fixed authorized service, and a service transmitted by the non-fixed authorized user is called a non-fixed authorized service. The non-fixed authorized user may include a license shared access (LSA, License Shared Access) user, or an unlicensed (Unlicensed) access user.

For example, for a TV frequency band, a user of a TV service is a fixed authorized user. A mobile user is authorized to use a part of frequency bands of the TV service. If a communications base station performs service transmission by adopting a TV frequency band, the communications base station is a non-fixed authorized user, and a service transmitted by the communications base station is a non-fixed authorized service.

By determining the first spectrum resource, the second spectrum resource, and the third spectrum resource, it can be known which resources may be used for allocation currently, and which resources being used may need to be switched to other resources.
103: Manage, according to occupancy information of the second spectrum resource and occupancy information of the third spectrum resource, a spectrum resource available for a non-fixed authorized communications node, where the first spectrum resource is an unavailable spectrum resource.

Generally, an available spectrum resource is a spectrum resource that can be used by a certain node when its geographic location meets a specified condition (such as transmit power and an interference requirement for another spectrum and node).

In the embodiment of the present invention, occupancy information of a spectrum resource of a fixed authorized user and occupancy information of a spectrum resource of a non-fixed authorized user are obtained by using a sensing device, so that a spectrum resource available for a communications node can be timely managed according to occupancy information of the spectrum resource.

The occupancy information of the spectrum resources mentioned in the present invention may include information that the spectrum resources are occupied, information that the spectrum resources are not occupied, or a combination of information that the spectrum resources are occupied and information that the spectrum resources are not occupied. For example, in step 101, the occupancy information of the spectrum resources may be the information that the spectrum resources are occupied, or may be the information that the spectrum resources are not occupied, or may be the combination of the information that the spectrum resources are occupied and the information that the spectrum resources are not occupied. In step 103, the occupancy information of the second spectrum resource refers to information that the second spectrum resource is occupied; and the occupancy information of the third spectrum resource refers to information that the third spectrum resource is not occupied. In other words, the occupancy information of the spectrum resources mentioned in the present invention not only includes a situation that the spectrum resources are occupied (or a status that the spectrum resources are occupied), but also includes a situation that the spectrum resources are not occupied (or a status that the spectrum resources are not occupied).

In the embodiment of the present invention, the sensing device has a radio sensing capability, and can sense occupancy information of a spectrum resource in an ambient environment.

Optionally, as an embodiment, the method further includes: storing the occupancy information of the spectrum resources. The stored occupancy information of the spectrum resources may be information that the spectrum resources are occupied by the fixed authorized service or the non-fixed authorized service, or may be information that the spectrum resources are allocated to the non-fixed authorized user. Generally, a database may be adopted to store the occupancy information of the spectrum resources, and this database may be called a spectrum database.

Further, the determining, according to the occupancy information of the spectrum resources, a first spectrum resource occupied by a fixed authorized user, a second spectrum resource occupied by a non-fixed authorized user, and a third spectrum resource not occupied by any user in the spectrum resources may be implemented as: determining the first spectrum resource, the second spectrum resource, and the third spectrum resource according to an authorized situation (or an authorized status) of the spectrum resources. The authorized situation of the spectrum resources refers to spectrum resources allocated by adopting a fixed spectrum allocation policy, and information of a fixed authorized user and a fixed authorized service of the spectrum resources. According to the authorized situation of the spectrum resources, it can be determined that, in occupied spectrum resources, which spectrum resources are occupied by a fixed authorized user and which spectrum resources are occupied by a non-fixed authorized user.

Further, the authorized situation of the spectrum resources may be stored in the spectrum management apparatus, or may be obtained from outside of the wireless communications network, for example, obtained from a spectrum database of a third party. A source of the authorized situation of the spectrum resources may be relevant spectrum information provided by a government, or a provider who is designated or authenticated by a government to provide spectrum information.

Optionally, the communications node according to the embodiment of the present invention may be a base station or a UE.

Optionally, the sensing device mentioned in the embodiment of the present invention may be a network element independent of the communications node in the wireless communications network.

Optionally, the sensing device mentioned in the embodiment of the present invention may be a component of the communications node. For example, when the communications node is a base station, the sensing device may be a component of the base station; and when the communications node is a UE, the sensing device may be a component of the UE.

Optionally, as an embodiment, before the occupancy information of the spectrum resources that is sent by the sensing device and obtained by the sensing device is received, first control information may be sent to the sensing device. The first control information may be used to control the sensing device to obtain the occupancy information of the spectrum resources and send the occupancy information of the spectrum resources.

FIG. 2 is an interaction flow chart that a spectrum management apparatus obtains occupancy information of spectrum resources according to an embodiment of the present invention.
201: Send first control information to a sensing apparatus, where the first control information may be used to control a sensing device to obtain occupancy information of spectrum resources and send the occupancy information of the spectrum resources.
202: The sensing apparatus obtains the occupancy information of the spectrum resources according to the received first control information.
203: The sensing apparatus sends the occupancy information of the spectrum resources.

When the sensing apparatus shown in FIG. 2 is an independent network element, the occupancy information of the spectrum resources may be occupancy information of spectrum resources in an ambient environment sensed by the sensing apparatus.

When the sensing apparatus shown in FIG. 2 is a base station, the occupancy information of the spectrum resources may further include information that spectrum resources are occupied by the base station itself.

Optionally, as another embodiment, receiving the occupancy information of the spectrum resources that is sent by the sensing device and obtained by the sensing device may be receiving the occupancy information of the spectrum resources that is sent by the sensing device at predetermined time or periodically. For example, the predetermined time may be a specific time point, such as 8 pm, 9 pm, 10 pm, 2 am, or 4 am. It may also be set that the sending is performed periodically, for example, the sending is performed every one hour or two hours.

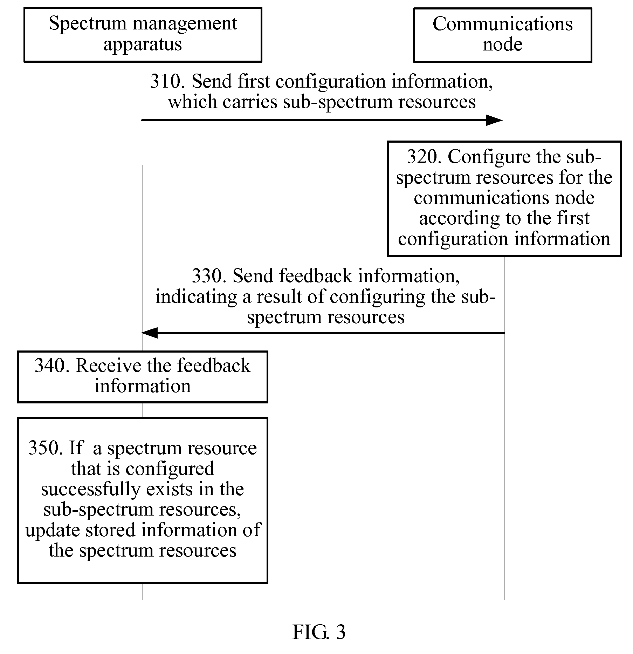

FIG. 3 is an interaction flow chart for allocating a spectrum resource according to an embodiment of the present invention. Optionally, as an embodiment, a method shown in FIG. 3 is an implementation manner of step 103.
310: Send first configuration information to a communications node, where the first configuration information carries sub-spectrum resources allocated to the communications node, and the sub-spectrum resources may be spectrum resources in second spectrum resources or in a third spectrum resources.
320: The communications node configures the sub-spectrum resources of the communications node according to the first configuration information.
330: The communications node sends feedback information, where the feedback information may indicate a result that the communications node configures the sub-spectrum resources according to the first configuration information.

In the embodiment of the present invention, the sub-spectrum resources may be one or more groups of spectrum resources waiting to be configured. The feedback information may just simply indicate wholly successful or wholly unsuccessful information, or may indicate a spectrum resource that is configured successfully or a spectrum resource that is configured unsuccessfully in the sub-spectrum resources.
340: Receive the feedback information sent by the communications node.
350: If a spectrum resource that is configured successfully exists in the sub-spectrum resources, update stored information of the spectrum resources.
If the feedback information indicates that the communications node configures the sub-spectrum resources according to the first configuration information succeeds wholly or partially, in other words, a sub-spectrum resource that is configured successfully exists in the spectrum resources, which also means that occupancy information of a spectrum resource managed by a spectrum management apparatus changes. In this case, a status of the spectrum resource managed in the spectrum management apparatus needs to be updated.

Optionally, as another embodiment, when the communications node is a base station, a startup message sent by the base station may further be received, and a first configuration message is sent to the base station according to the startup message to allocate a spectrum resource for the base station.

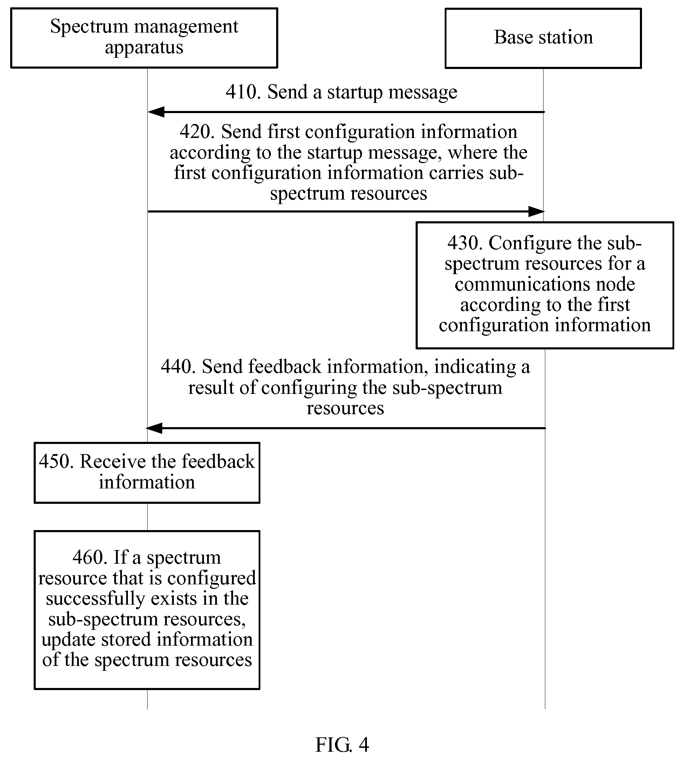

FIG. 4 is another interaction flow chart for allocating a spectrum resource according to an embodiment of the present invention.
410: Abase station sends a startup message.

Optionally, startup information may be at least one kind of the following: such as, a geographic location of the base station, maximum transmit power of the base station, antenna configuration of the base station, a height of the base station, a bandwidth range supported by the base station, a technical standard supported by the base station, a modulation and coding scheme of the base station, whether the base station supports a sensing function, and service information of the base station.
420: A spectrum management apparatus sends first configuration information according to the startup message, where the first configuration information carries sub-spectrum resources allocated to the base station, and the sub-spectrum resources are all or a part of spectrum resources in second spectrum resources or in third spectrum resources. A method of steps 430, 440, 450, and 460 is similar to the method of steps 320, 330, 340, and 350 respectively, and details are not described herein again.

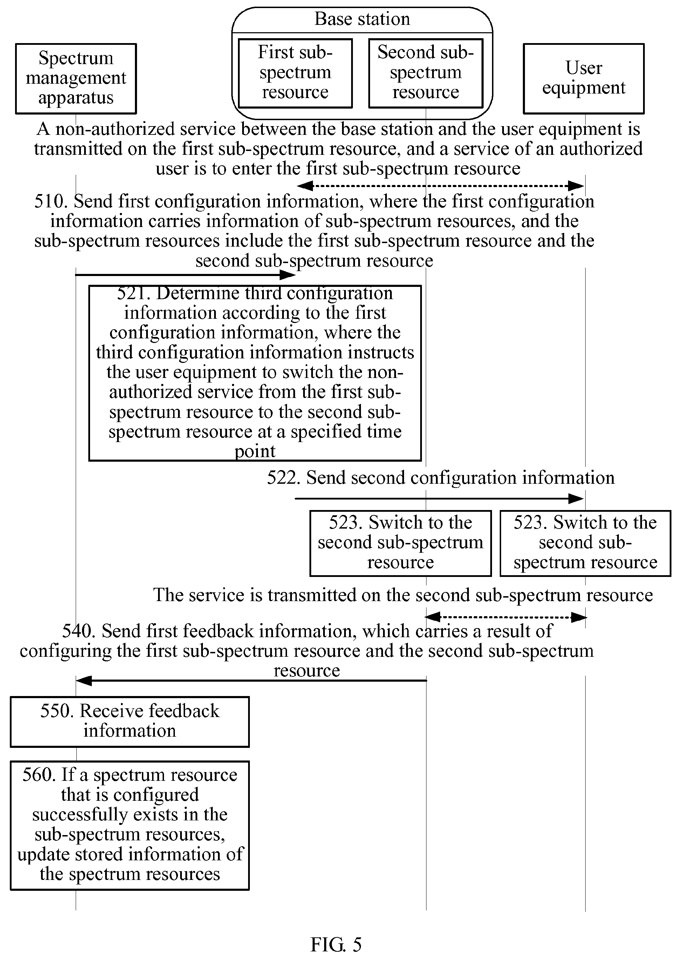

Optionally, as another embodiment, when the communications node is a base station, and a non-fixed authorized service between the base station and a user equipment is being transmitted, an implementation manner for the communications node to configure the sub-spectrum resources according to the first configuration information is shown in FIG. 5.

The non-fixed authorized service between the base station and the user equipment is transmitted on a first sub-spectrum resource, and a service of a fixed authorized user is about to enter the first sub-spectrum resource.
510: Send the first configuration information to the base station, where the first configuration information carries information of the sub-spectrum resources, and the sub-spectrum resources include a first sub-spectrum resource that is allocated to the base station and a second sub-spectrum resource that is to be allocated to the base station. Step 510 is similar to step 310. The first sub-spectrum resource is a spectrum resource in the second spectrum resources, and the second sub-spectrum resource is a spectrum resource in the third spectrum resources.
521: The base station determines second configuration information according to the first configuration information, where the second configuration information instructs the user equipment to switch the non-fixed authorized service from the first sub-spectrum resource to the second sub-spectrum resource at a specified time point.
522: The base station sends third configuration information to the user equipment.
523: The base station and the user equipment switch the non-fixed authorized service from the first sub-spectrum resource to the second sub-spectrum resource at the specified time point.

In this case, the non-fixed authorized service between the base station and the user equipment is transmitted on the second sub-spectrum resource.
Steps 540, 550, and 560 are similar to steps 330, 340, and 350, and details are not described herein again.

Optionally, operating parameter information of the communications node sent by a sensing device and obtained by the sensing device may further be received. The operating parameter information may include at least one kind of the following: such as, spectral bandwidth information, transmit power information, modulation and coding scheme information, and decoding mode information of the communications node.

Optionally, occupancy information of spectrum resources that is sent by the communications node may further be received. The communications node may be the base station or the user equipment. When the base station (or the user equipment) has a sensing capability, the occupancy information of the spectrum resources may include occupancy information of spectrum resources in an ambient environment. When the base station (or the user equipment) has no sensing capability, the occupancy information of the spectrum resources is information that spectrum resources are occupied by the base station (or the user equipment) itself.

Optionally, operating parameter information of the communications node sent by the communications node may further be received. The operating parameter information may include at least one kind of the following: such as, spectral bandwidth information, transmit power information, modulation and coding scheme information, channel quality (CQI, Channel Quality Indicator) information, signal to interference and noise ratio (SINR, Signal to Interference and Noise Ratio) information, bit error rate (BER, Bit Error Rate)/block error rate (BLER, Block Error Rate) information, maximum service throughput information within specified time, minimum service throughput information within specified time, average service throughput information within specified time, and service type information of the communications node.

Optionally, as another embodiment, the second configuration information may further be sent to the communications node according to the received operating parameter information of the communications node, where the second configuration information is used to adjust an operating parameter of the communications node. The operating parameter may include at least one kind of the following: such as, a spectral bandwidth, transmit power, antenna configuration, and an access policy of the communications node.

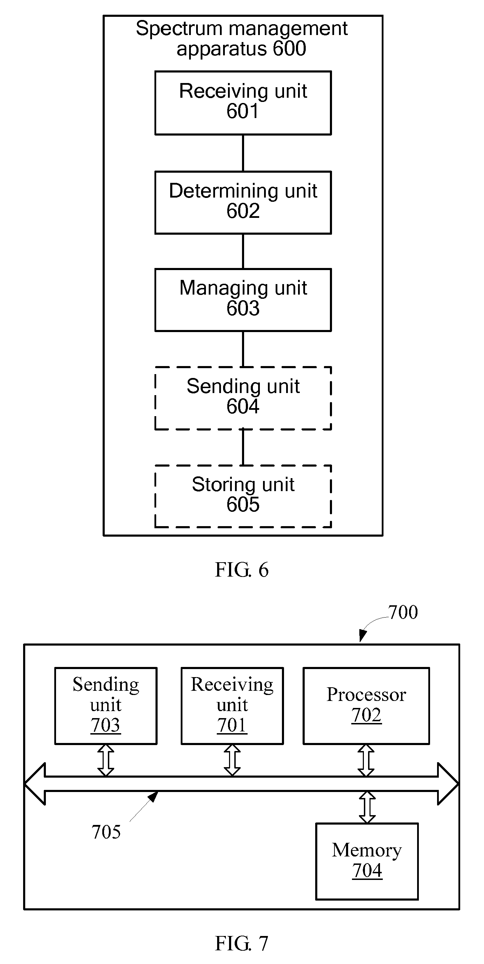

FIG. 6 is a schematic block diagram of a spectrum management apparatus according to an embodiment of the present invention. A spectrum management apparatus 600 may include a receiving unit 601, a determining unit 602, and a managing unit 603.

The receiving unit 601 may receive occupancy information of spectrum resources that is sent by a sensing device.

The determining unit 602 may determine, according to the occupancy information of the spectrum resources, a first spectrum resource occupied by a fixed authorized user, a second spectrum resource occupied by a non-fixed authorized user, and a third spectrum resource not occupied by any user in the spectrum resources.

The managing unit 603 may configure, according to occupancy information of the second spectrum resource and occupancy information of the third spectrum resource, a spectrum resource available for a non-fixed authorized communications node, where the first spectrum resource is an unavailable spectrum resource.

In the embodiment of the present invention, occupancy information of a spectrum resource of a fixed authorized user and occupancy information of a spectrum resource of a non-fixed authorized user are obtained by using a sensing device, so that a spectrum resource available for a communications node can be timely managed according to occupancy information of the spectrum resource.

Optionally, as an embodiment, the spectrum management apparatus 600 may further include a storing unit 605. The storing unit 605 may store the occupancy information of the spectrum resources. The storing unit 605 may generally adopt a database to store the occupancy information of the spectrum resources.

Further, the determining unit 602 may further determine the first spectrum resource, the second spectrum resource, and the third spectrum resource according to an authorized situation (or an authorized status) of the spectrum resources. The authorized situation of the spectrum resources refers to spectrum resources allocated by adopting a fixed spectrum allocation policy, and information of a fixed authorized user and a fixed authorized service of the spectrum resources. According to the authorized situation of the spectrum resources, it can be determined that, in occupied spectrum resources, which spectrum resources are occupied by a fixed authorized user and which spectrum resources are occupied by a non-fixed authorized user.

Further, the authorized situation of the spectrum resources may be stored in the spectrum management apparatus, or may be obtained from outside of a wireless communications network, for example, obtained from a spectrum database of a third party. A source of the authorized situation of the spectrum resources may be relevant spectrum information provided by a government, or a provider who is designated or authenticated by a government to provide spectrum information.

Optionally, the communications node according to the embodiment of the present invention may be a base station or a UE.

Optionally, the sensing device mentioned in the embodiment of the present invention may be a network element independent of the communications node in the wireless communications network.

Optionally, the sensing device mentioned in the embodiment of the present invention may be a component of the communications node. For example, when the communications node is a base station, the sensing device may be a component of the base station; and when the communications node is a UE, the sensing device may be a component of the UE.

Optionally, as an embodiment, the spectrum management apparatus 600 may further include a sending unit 604. The managing unit 603 may further generate first control information, where the first control information may control the sensing device to obtain the occupancy information of the spectrum resources and send the occupancy information of the spectrum resources. The sending unit 604 may send the first control information.

Optionally, as another embodiment, the receiving unit 601 may be specifically configured to receive the occupancy information of the spectrum resources that is sent by the sensing device at predetermined time or periodically.
Optionally, as another embodiment, the managing unit 603 may generate first configuration information, where the first configuration information carries sub-spectrum resources allocated to the communications node, and the sub-spectrum resources may include a spectrum resource in the second spectrum resource or in the third spectrum resource. The sending unit 604 may send the first configuration information to the communications node. The receiving unit 601 may receive feedback information sent by the communications node. The feedback information may indicate a result that the communications node configures the sub-spectrum resources according to the first configuration information succeeds or fails. When the feedback information indicates that the communications node configures the sub-spectrum resources according to the first configuration information succeeds, the storing unit 605 may update stored information of the spectrum resources according to the feedback information.

Optionally, as another embodiment, when the communications node is a base station, the receiving unit 601 may further receive startup information sent by the base station, where the startup information is used to request the base station to enable a required spectrum resource. The managing unit 603 may further generate the first configuration information according to the startup information.

Optionally, the startup information may include at least one kind of the following: such as, a geographic location of the base station, maximum transmit power of the base station, antenna configuration of the base station, a height of the base station, a bandwidth range supported by the base station, a technical standard supported by the base station, a modulation and coding scheme of the base station, whether the base station supports a sensing function, and service information of the base station.

Optionally, as another embodiment, when the communications node is a base station, and a non-fixed authorized service between the base station and a user equipment is transmitted on a first sub-spectrum resource, and a service of a fixed authorized user is about to enter the first sub-spectrum resource, specific implementation that the communications node configures the sub-spectrum resources according to the first configuration information may include: sending, by the base station, third configuration information to the user equipment, where the third configuration information instructs the user equipment to switch the non-fixed authorized service from the first sub-spectrum resource to the second sub-spectrum resource at a specified time point, and the first sub-spectrum resource is a spectrum resource currently used by the non-fixed authorized service; and switching the non-fixed authorized service from the first sub-spectrum resource to the second sub-spectrum resource at the specified time point.

Optionally, the receiving unit 601 may further receive operating parameter information of the communications node sent by the sensing device and obtained by the sensing device. The operating parameter information may include at least one kind of the following: such as, spectral bandwidth information, transmit power information, modulation and coding scheme information, and decoding mode information of the communications node.

Optionally, the receiving unit 601 may further receive occupancy information of spectrum resources that is sent by the communications node. The communications node may be the base station or the user equipment. When the base station (or the user equipment) has a sensing capability, the occupancy information of the spectrum resources may include occupancy information of spectrum resources in an ambient environment. When the base station (or the user equipment) has no sensing capability, the occupancy information of the spectrum resources is information that spectrum resources are occupied by the base station (or the user equipment) itself.

Optionally, the receiving unit 601 may further receive operating parameter information of the communications node sent by the communications node. The operating parameter information may include at least one kind of the following: such as, spectral bandwidth information, transmit power information, modulation and coding scheme information, CQI information, SINR information, BER/BLER information, maximum service throughput information within specified time, minimum service throughput information within specified time, average service throughput information within specified time, and service type information of the communications node.

Optionally, as another embodiment, the managing unit 603 may further send second configuration information to the communications node according to the received operating parameter information of the communications node, where the second configuration information is used to adjust an operating parameter of the communications node. The operating parameter may include at least one kind of the following: such as, a spectral bandwidth, transmit power, antenna configuration, and an access policy of the communications node.

Optionally, the spectrum management apparatus 600 may be a network element of a core network of the wireless communications network, or a component of a network controller or a gateway in the wireless communications network, or a component of a base station in the wireless communications network, or a network element outside a core network in the wireless communications network.

Optionally, in the embodiment of the present invention, the spectrum resource management apparatus 600 may execute the methods shown in FIG. 1 to FIG. 5, and details are not described in the present invention again.

FIG. 7 is another schematic block diagram of a spectrum management apparatus according to an embodiment of the present invention. A spectrum management apparatus 700 may include a receiving unit 701, a processor 702, a sending unit 703, and a memory 704.

The receiving unit 701 may receive occupancy information of spectrum resources that is sent by a sensing device.

The processor 702 may determine, according to the occupancy information of the spectrum resources, a first spectrum resource occupied by a fixed authorized user, a second spectrum resource occupied by a non-fixed authorized user, and a third spectrum resource not occupied by any user in the spectrum resources.

The memory 704 stores a command that enables the processor 702 to determine, according to the occupancy information of the spectrum resources, the first spectrum resource occupied by the fixed authorized user, the second spectrum resource occupied by the non-fixed authorized user, and the third spectrum resource not occupied by any user in the spectrum resources.

The processor 702 may further configure, according to occupancy information of the second spectrum resource and occupancy information of the third spectrum resource, a spectrum resource available for a non-fixed authorized communications node.

The memory 704 further stores a command that enables the processor 702 to configure, according to the occupancy information of the second spectrum resource and the occupancy information of the third spectrum resource, the spectrum resource available for the non-fixed authorized communications node.

In the embodiment of the present invention, occupancy information of a spectrum resource of a fixed authorized user and occupancy information of a spectrum resource of a non-fixed authorized user are obtained by using a sensing device, so that a spectrum resource available for a communications node can be timely managed according to occupancy information of the spectrum resource.

The processor 702 controls operations of the spectrum management apparatus 700, and the processor 702 may also be called a CPU (Central Processing Unit, central processing unit). The memory 704 may include a read-only memory and a random access memory and provide a command and data for the processor 702. A part of the memory 704 may further include a non-volatile random access memory (NVRAM). In a specific application, various components of the spectrum management apparatus 700 are coupled together through a bus system 705, and in addition to a data bus, the bus system 705 may further include a power bus, a control bus, a status signal bus, and the like. However, for a clear description, various buses are marked as the system bus 705 in the figure.

The method disclosed in the foregoing embodiment of the present invention may be applied to the processor 702, or is implemented by the processor 702. The processor 702 may be an integrated circuit chip and has a capability to process a signal. During implementation, various steps of the foregoing method may be completed through an integrated logic circuit of hardware or a command in the form of software in the processor 702. The foregoing processor 702 may be a general processor, a digital signal processor (DSP), an application-specific integrated circuit (ASIC), a field programmable gate array (FPGA) or another programmable gate array, a discrete component gate circuit or a transistor logic device, and a discrete hardware component; and may implement or execute various methods, steps and logic block diagrams disclosed in the embodiment of the present invention. The general processor may be a microprocessor, or the processor may be any conventional processor or the like. With reference to the embodiment of the present invention, the steps of the disclosed methods may be directly executed and completed by a hardware decoding processor, or executed and completed by a hardware and software module combination in a decoding processor. A software module may be located in a mature storage medium in the prior art, such as a random access memory, a flash memory, a read-only memory, a programmable read-only memory or an electrically erasable programmable read-only memory, and a register. The storage medium is located in the memory 704, and the processor 702 reads information in the memory 704. The steps of the foregoing method are performed by combining its hardware.

Optionally, as an embodiment, the memory 704 may further store the occupancy information of the spectrum resources. The memory 704 may generally adopt a database to store the occupancy information of the spectrum resources.

Further, the processor 702 may further determine the first spectrum resource, the second spectrum resource, and the third spectrum resource according to an authorized situation (or an authorized status) of the spectrum resources. The memory 704 may further store a command that enables the processor 702 to determine the first spectrum resource and the second spectrum resource according to the authorized situation of the spectrum resources. The authorized situation of the spectrum resources refers to spectrum resources allocated by adopting a fixed spectrum allocation policy, and information of a fixed authorized user and a fixed authorized service of the spectrum resources. According to the authorized situation of the spectrum resources, it can be determined that, in occupied spectrum resources, which spectrum resources are occupied by a fixed authorized user and which spectrum resources are occupied by a non-fixed authorized user.

Further, the authorized situation of the spectrum resources may be stored in the spectrum management apparatus, or may be obtained from outside of a wireless communications network, for example, obtained from a spectrum database of a third party. A source of the authorized situation of the spectrum resources may be relevant spectrum information provided by a government, or a provider who is designated or authenticated by a government to provide spectrum information.

Optionally, the communications node according to the embodiment of the present invention may be a base station or a UE.

Optionally, the sensing device mentioned in the embodiment of the present invention may be a network element independent of the communications node in the wireless communications network.

Optionally, the sensing device mentioned in the embodiment of the present invention may be a component of the communications node. For example, when the communications node is a base station, the sensing device may be a component of the base station; and when the communications node is a UE, the sensing device may be a component of the UE.

Optionally, as an embodiment, the spectrum management apparatus 700 may further include a sending unit 703. The processor 702 may further generate first control information. The memory 704 may further store a command that enables the processor 702 to generate the first control information. The first control information may control the sensing device to obtain the occupancy information of the spectrum resources and send the occupancy information of the spectrum resources. The sending unit 703 may send the first control information.

Optionally, as another embodiment, the receiving unit 701 may be specifically configured to receive the occupancy information of the spectrum resources that is sent by the sensing device at regular time.

Optionally, as another embodiment, the processor 702 may generate first configuration information. The memory 704 may further store a command that enables the processor 702 to generate the first configuration information. The first configuration information carries sub-spectrum resources that are allocated to or to be allocated to the communications node, and the sub-spectrum resources may include a spectrum resource in the second spectrum resource or in the third spectrum resource. The sending unit 703 may further send the first configuration information to the communications node. The receiving unit 701 may receive feedback information sent by the communications node. The feedback information may indicate a result that the communications node configures the sub-spectrum resources according to the first configuration information succeeds or fails. When the feedback information indicates a result that the communications node configures the sub-spectrum resources according to the first configuration information succeeds, the memory 704 may further update stored occupancy information of the spectrum resources according to the feedback information.

Optionally, as another embodiment, when the communications node is a base station, the receiving unit 701 may further receive startup information sent by the base station, where the startup information is used to request the base station to enable a required spectrum resource. The processor 702 may further generate the first configuration information according to the startup information. The memory 704 may further store a command that enables the processor 702 to generate the first configuration information according to the startup information.

Optionally, the startup information may include at least one kind of the following: such as, a geographic location of the base station, maximum transmit power of the base station, antenna configuration of the base station, a height of the base station, a bandwidth range supported by the base station, a technical standard supported by the base station, a modulation and coding scheme of the base station, whether the base station supports a sensing function, and service information of the base station.

Optionally, as another embodiment, when the communications node is a base station, and a non-fixed authorized service between the base station and a user equipment is transmitted on a first sub-spectrum resource, and a service of a fixed authorized user is about to enter the first sub-spectrum resource, specific implementation that the communications node configures the sub-spectrum resources according to the first configuration information may include: sending, by the base station, third configuration information to the user equipment, where the third configuration information instructs the user equipment to switch the non-fixed authorized service from the first sub-spectrum resource to the second sub-spectrum resource at a specified time point, and the first sub-spectrum resource is a spectrum resource currently used by the non-fixed authorized service; and switching the non-fixed authorized service from the first sub-spectrum resource to the second sub-spectrum resource at the specified time point.

Optionally, the receiving unit 701 may further receive operating parameter information of the communications node sent by the sensing device and obtained by the sensing device. The operating parameter information may include at least one kind of the following: such as, spectral bandwidth information, transmit power information, modulation and coding scheme information, and decoding mode information of the communications node.

Optionally, the receiving unit 701 may further receive occupancy information of spectrum resources that is sent by the communications node. The communications node may be the base station or the user equipment. When the base station (or the user equipment) has a sensing capability, the occupancy information of the spectrum resources may include occupancy information of spectrum resources in an ambient environment. When the base station (or the user equipment) has no sensing capability, the occupancy information of the spectrum resources is information that spectrum resources are occupied by the base station (or the user equipment) itself.

Optionally, the receiving unit 701 may further receive operating parameter information of the communications node sent by the communications node. The operating parameter information may include at least one kind of the following: such as, spectral bandwidth information, transmit power information, modulation and coding scheme information, CQI information, SINR information, BER/BLER information, maximum service throughput information within specified time, minimum service throughput information within specified time, average service throughput information within specified time, and service type information of the communications node.

Optionally, as another embodiment, the processor 702 may further send second configuration information to the communications node according to the received operating parameter information of the communications node. The memory 704 may further store a command that enables the processor 702 to send the second configuration information to the communications node according to the received operating parameter information of the communications node. The second configuration information is used to adjust an operating parameter of the communications node. The operating parameter may include at least one kind of the following: such as, a spectral bandwidth, transmit power, antenna configuration, and an access policy of the communications node.

Optionally, the spectrum management apparatus 700 may be a network element of a core network of the wireless communications network, or a component of a network controller or a gateway in the wireless communications network, or a component of a base station in the wireless communications network, or a network element outside a core network in the wireless communications network.

Optionally, in the embodiment of the present invention, the spectrum resource management apparatus 700 may execute the methods shown in FIG. 1 to FIG. 5, and details are not described in the present invention again.

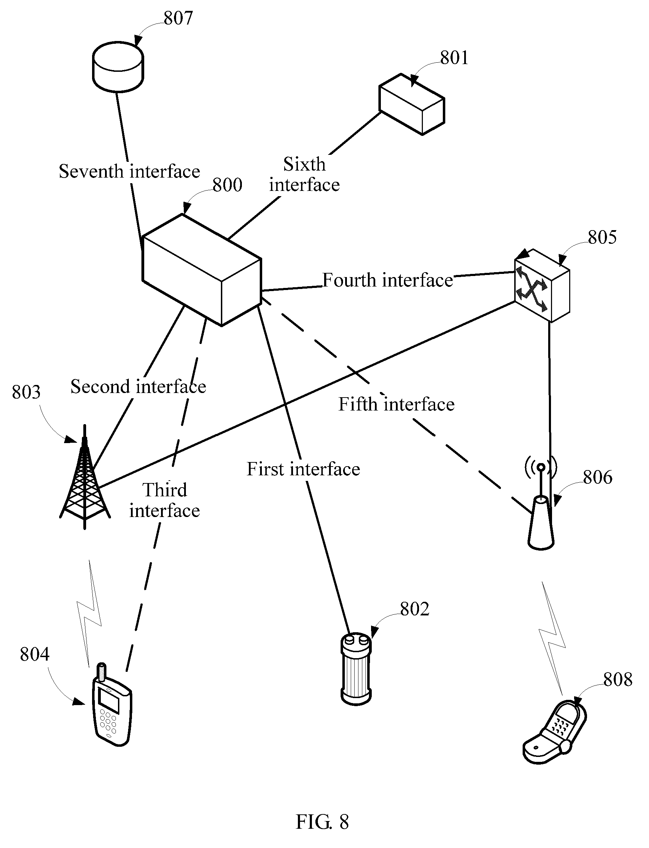

FIG. 8 is a schematic diagram of a wireless network architecture of a wireless communications system according to an embodiment of the present invention. In FIG. 8, both 800 and 801 are spectrum management apparatuses, 802 is an independent sensing device, 803 is a first base station having a sensing capability, 804 is a first UE having a sensing capability, 805 is a network controller or a gateway, 806 is a second base station having no sensing capability, 807 is a third party system, and 808 is a second UE having no sensing capability.

The wireless communications system may include the spectrum management apparatus 800 (or the spectrum management apparatus 801) and a sensing device. The sensing device has a radio sensing capability. The spectrum management apparatus 800 may be the spectrum resource management apparatus 600 or the spectrum resource management apparatus 700 mentioned in the foregoing description, and details are not described in the present invention again.

In the embodiment of the present invention, occupancy information of a spectrum resource of a fixed authorized user and occupancy information of a spectrum resource of a non-fixed authorized user are obtained by using a sensing device, so that a spectrum resource available for a communications node can be timely managed according to occupancy information of the spectrum resource.

Optionally, the wireless communications system may further include a communications node. The communications node may receive configuration information sent by the spectrum management apparatus, and configure a spectrum resource according to the configuration information. The communications node may be the first base station 803, the second base station 806, the first UE 804, or the second UE 808 shown in FIG. 8.

Optionally, the sensing device may be an independent sensing device and is used as a network element of a wireless communications network to which the wireless communication system belongs, such as, the sensing device 802 shown in FIG. 8.

Optionally, the sensing device may also be a component of the communications node of the wireless communications network, such as, a component of a base station of the wireless communications network, or a component of a UE of the wireless communications network, such as, the first base station 803 and the first UE 804 shown in FIG. 8.

Optionally, the wireless communications system may further include a first interface between the spectrum management apparatus 800 and the sensing device 802. The first interface is used for the spectrum management apparatus 800 to obtain, from the sensing device 802, occupancy information of spectrum resources that is sensed by the sensing device 802; or is used to configure an operating parameter of the sensing device 802. The sensing device 802 is a network element in the wireless communications network.

Optionally, the wireless communications system may further include a second interface between the spectrum management apparatus 800 and the first base station 803, where the second interface is used for the spectrum management apparatus 800 to obtain, from the first base station 803, occupancy information of spectrum resources that is sensed by the first base station 803 and information that spectrum resources are occupied by the first base station 803; or is used to configure an operating parameter of the first base station 803. The first base station 803 has a radio sensing capability.

Optionally, the wireless communications system may further include a third interface between the spectrum management apparatus 800 and the first UE 804. The third interface is used for the spectrum management apparatus 800 to obtain, from the first UE 804, occupancy information of spectrum resources that is sensed by the first UE 804 and information that spectrum resources are occupied by the first UE 804. The first UE 804 has a radio sensing capability.

Optionally, when the spectrum management apparatus 800 is a component of a control layer of a core network of the wireless communications network, the wireless communications system may further include a fourth interface between the spectrum management apparatus 800 and the network controller/gateway 805, where the fourth interface is used for the spectrum management apparatus 800 to send, through the network controller/gateway, control information or operating parameter configuration information to the sensing device 802 or the communications node, such as the first base station 803 or the first UE 804.

Optionally, the wireless communications system includes a fifth interface between the spectrum management apparatus 800 and the second base station 806, where the fifth interface is used for the spectrum management apparatus 800 to obtain, from the second base station 806, information that spectrum resources are occupied by the second base station 806; or is used to configure an operating parameter of the second base station 806. The second base station 806 has no radio sensing capability.

Optionally, the wireless communications system includes a sixth interface between the spectrum management apparatus 800 and the spectrum management apparatus 801, where the sixth interface is used for the spectrum management apparatus 800 to obtain, from the spectrum apparatus 801, occupancy information of spectrum resources that is stored in the spectrum management apparatus 801. The spectrum management apparatus 801 belongs to another spectrum management apparatus existing in the wireless communications network.

Optionally, the wireless communications system includes a seventh interface between the spectrum management apparatus 800 and the third party system 807, where the seventh interface is used for the spectrum management apparatus 800 to obtain, from the third party system 807, information of a fixed authorized user of spectrum resources. The third party system 807 may be a spectrum database of a third party, and its source may be relevant spectrum information provided by a government, or a provider who is designated or authenticated by a government to provide spectrum information.

It should be understood that, in the embodiments of the present invention, Serial numbers of the foregoing processes do not mean an executing sequence. The executing sequence of the processes is determined according to their function and internal logic, and shall not constitute any limitation to implementation processes of the embodiments of the present invention.

A person of ordinary skill in the art may be aware that, with reference to the examples described in the embodiments disclosed in this specification, units and algorithm steps can be implemented by electronic hardware, or a combination of computer software and electronic hardware. Whether the functions are performed in a hardware or software manner depends on particular applications and design constraint conditions of the technical solutions. A person skilled in the art may use a different method to implement the described functions for each particular application, but it should not be considered that such implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the foregoing described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or a part contributing to the prior art, or a part of the technical solutions may be implemented in the form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement that can be readily figured out by a person skilled in the art within the technical scope disclosed in the present invention shall all fall within the protection scope of the present invention. Therefore, the protection scope of the present invention shall be subject to the protection scope of the claims.

## Claims

1. A method for managing a dynamic spectrum, comprising:
receiving occupancy information of spectrum resources that is sent by a sensing device;
determining, according to the occupancy information of the spectrum resources, a first spectrum resource occupied by a fixed authorized user, a second spectrum resource occupied by a non-fixed authorized user, and a third spectrum resource not occupied by any user in the spectrum resources; and
configuring, according to occupancy information of the second spectrum resource and occupancy information of the third spectrum resource, a spectrum resource available for a communications node, wherein the first spectrum resource is an unavailable spectrum resource.

2. The method according to claim 1, wherein the determining, according to the occupancy information of the spectrum resources, a first spectrum resource occupied by a fixed authorized user, a second spectrum resource occupied by a non-fixed authorized user, and a third spectrum resource not occupied by any user in the spectrum resources comprises:
determining the first spectrum resource, the second spectrum resource, and the third spectrum resource according to an authorized status of the spectrum resources.

3. The method according to claim 1, before the receiving occupancy information of spectrum resources that is sent by a sensing device and obtained by the sensing device, further comprising:
sending first control information to the sensing device, wherein the first control information is used to control the sensing device to obtain the occupancy information of the spectrum resources and send the occupancy information of the spectrum resources.

4. The method according to claim 1, wherein the receiving occupancy information of spectrum resources that is sent by a sensing device comprises: receiving, at predetermined time or periodically, the occupancy information of the spectrum resources that is sent by the sensing device.

5. The method according to any one of claims 1 to 4, wherein the configuring, according to occupancy information of the second spectrum resource and occupancy information of the third spectrum resource, a spectrum resource available for a communications node comprises:
sending first configuration information to the communications node, wherein the first configuration information carries information of sub-spectrum resources allocated to the communications node, and the sub-spectrum resources comprise a spectrum resource in the second spectrum resource or in the third spectrum resource, so as to enable the communications node to configure the sub-spectrum resources according to the first configuration information.

6. The method according to claim 5, wherein the method further comprises:
receiving feedback information of the communications node, wherein the feedback information is used to indicate a result that the communications node configures the sub-spectrum resources according to the first configuration information; and
updating the occupancy information of the spectrum resources according to the result indicated by the feedback information.

7. The method according to claim 5, wherein the communications node is a base station and the method further comprises:
before the configuring, according to occupancy information of the second spectrum resource and occupancy information of the third spectrum resource, a spectrum resource available for a communications node, receiving startup information sent by the base station, wherein the startup information is used to request the base station to enable a required spectrum resource; and
the sending first configuration information to the communications node comprises: sending the first configuration information to the base station according to the startup information.

8. The method according to claim 7, wherein the startup information comprises at least one kind of the following:
a geographic location, maximum transmit power, antenna configuration, a height, a supported bandwidth range, a supported technical standard, a modulation and coding scheme, whether to support a sensing function, and service information of the base station.

9. The method according to any one of claims 1 to 4, wherein,
the communications node is a base station, and if a non-fixed authorized service of the base station is being transmitted between the base station and a user equipment, the configuring, according to occupancy information of the second spectrum resource and occupancy information of the third spectrum resource, a spectrum resource available for a communications node comprises:
sending, by the base station, to the user equipment, third configuration information, and the second spectrum resource and the third spectrum resource in the sub-spectrum resources carried in the third configuration information, wherein the third configuration information instructs the user equipment to switch the non-fixed authorized service from the second spectrum resource to the third spectrum resource at a specified time point.

10. The method according to any one of claims 1 to 9, further comprising:
receiving the occupancy information of the spectrum resources that is sent by the communications node or operating parameter information of the communications node, wherein the operating parameter information comprises at least one kind of the following: spectral bandwidth information, transmit power information, modulation and coding scheme information, channel quality indicator CQI information, signal to interference and noise ratio SINR information, bit error rate BER/block error rate BLER information, maximum service throughput information within specified time, minimum service throughput information within specified time, average service throughput information within specified time, and service type information of the communications node.

11. The method according to claim 10, further comprising:
sending second configuration information to the communications node according to the operating parameter information of the communications node, wherein the second configuration information is used to adjust an operating parameter of the communications node, and the operating parameter comprises at least one kind of the following: a spectral bandwidth, transmit power, antenna configuration, and an access policy of the communications node.

12. A spectrum management apparatus, wherein the spectrum management apparatus comprises:
a receiving unit, configured to receive occupancy information of spectrum resources that is sent by a sensing device;
a determining unit, configured to determine, according to the occupancy information of the spectrum resources that is received by the receiving unit, a first spectrum resource occupied by a fixed authorized user, a second spectrum resource occupied by a non-fixed authorized user, and a third spectrum resource not occupied by any user in the spectrum resources; and
a managing unit, configured to configure, according to occupancy information of the second spectrum resource and occupancy information of the third spectrum resource, a spectrum resource available for a non-fixed authorized communications node, wherein the first spectrum resource is an unavailable spectrum resource.

13. The spectrum management apparatus according to claim 12, wherein the determining unit is further configured to determine the first spectrum resource, the second spectrum resource, and the third spectrum resource according to an authorized status of the spectrum resources.

14. The spectrum management apparatus according to claim 12, wherein,
the managing unit is further configured to generate first control information, wherein the first control information is used to control the sensing device to obtain the occupancy information of the spectrum resources and send the occupancy information of the spectrum resources; and
the spectrum management apparatus further comprises: a sending unit, configured to send the first control information to the sensing device.

15. The spectrum management apparatus according to claim 12, wherein the receiving unit is specifically configured to receive, at predetermined time or periodically, the occupancy information of the spectrum resources that is sent by the sensing device.

16. The spectrum management apparatus according to claim 12, wherein,
the managing unit is further configured to generate first configuration information, wherein the first configuration information carries sub-spectrum resources allocated to the communications node, and the sub-spectrum resources comprise a spectrum resource in the second spectrum resource or in the third spectrum resource, so as to enable the communications node to configure the sub-spectrum resources according to the first configuration information;
the sending unit is further configured to send the first configuration information to the communications node;
the receiving unit is further configured to receive feedback information of the communications node, wherein the feedback information is used to indicate a result that the communications node configures the sub-spectrum resources according to the first configuration information; and
the determining unit is further configured to update stored information of the spectrum resources according to the feedback information if that the communications node configures the sub-spectrum resources according to the first configuration information succeeds wholly or partially.

17. The spectrum management apparatus according to claim 16, wherein the receiving unit is further configured to receive startup information sent by the base station, wherein the startup information is used to request the base station to enable a required spectrum resource; and
the managing unit is further configured to generate the first configuration information according to the startup information.

18. A wireless communications system, comprising:
a sensing device, wherein the sensing device has a radio sensing capability and is configured to send occupancy information of spectrum resources; and
the spectrum management apparatus, configured to receive the occupancy information of the spectrum resources; determine, according to the occupancy information of the spectrum resources, a first spectrum resource occupied by a fixed authorized user, a second spectrum resource occupied by a non-fixed authorized user, and a third spectrum resource not occupied by any user in the spectrum resources; configure, according to occupancy information of the second spectrum resource and occupancy information of the third spectrum resource, a spectrum resource available for a communications node, wherein the first spectrum resource is an unavailable spectrum resource.

19. The system according to claim 18, further comprising:
the communications node, configured to receive configuration information sent by the spectrum management apparatus, and configure the spectrum resource of the communications node according to the configuration information.

20. The system according to claim 19, wherein:
the sensing apparatus is a network element independent of the communications node in the system; or
the sensing apparatus is a component of the communications node.
